# EUROPEAN PATENT APPLICATION

(11) **EP 4 726 573 A1**
(43) Date of publication of application: **15.04.2026**
(21) Application number: 24799907.1
(22) Date of filing: 26.06.2024
(51) Int. Cl.: G06F 16/33

(54) **ANALYSIS MANAGEMENT UNIT, AND INTERACTIVE MANAGEMENT SYSTEM AND METHOD FOR PHOTOVOLTAIC POWER STATION**

(30) Priority: 30.04.2023 CN 202310482386; 29.04.2024 CN 202410536667; 29.04.2024 CN 202410539011; 29.04.2024 CN 202410536837
(71) Applicant: Shanghai Sigeyuan Intelligent Technology Co., Ltd., Shanghai 200000 (CN)
(72) Inventor: WU, Yanchang, Shanghai 200000 (CN); PAN, Fanghong, Shanghai 200000 (CN); PENG, Yu, Shanghai 200000 (CN); LU, Wang, Shanghai 200000 (CN); JIANG, Chao, Shanghai 200000 (CN)
(74) Representative: Bayramoglu et al.
(86) International application number: PCT/CN2024/101761
(87) International publication number: WO 2024/227451

(57) **Abstract**

Provided are an analysis and management unit, and an interactive management system and method for a photovoltaic (PV) power station. The system employs "language interaction" to simplify a user input at a terminal, reducing input requirements and lowering the operation threshold for users. A large language model (LLM) is innovatively introduced, which includes an input side for receiving a comprehensive input instruction in text form and an output side for providing a natural language-based output instruction. The front-end input and back-end processing and output are based on natural language processing, which better aligns with the usage requirements of conventional users. In the final specific execution, the natural language-based output instruction is converted into a corresponding format for specific execution, reducing the processing difficulty of the management method. Furthermore, the data sources during processing are more diverse, resulting in enhanced processing capability of the system and enabling the method to address a wider range of problems. Accordingly, this application enhances user experience while better enabling all-weather and comprehensive management of the PV power station.

## Description

### TECHNICAL FIELD

The present disclosure relates to the technical field of photovoltaic (PV) control, specifically to the technical field of PV power station management, and in particular to an analysis and management unit, and to an interactive management system and method for a PV power station.

### BACKGROUND TECHNOLOGY

A PV power station refers to a power generation system that harnesses solar energy, includes electronic components made of special materials, such as crystalline silicon panels and inverters, and is connected to and supplies power to the power grid. PV power stations are classified into off-grid power generation systems with storage batteries and grid-connected power generation systems without storage batteries.

As an operation and maintenance system applied to PV power stations, a PV power station management system plays a critical role in sustaining the normal operation of PV power stations. However, conventional PV power station management systems impose stringent professional requirements, which in turn place increasingly high demands on operation and maintenance personnel, not to mention ordinary users. Ordinary users are essentially unable to perform independent monitoring and maintenance of PV power stations.

Therefore, developing a user-oriented management system and method for PV power stations constitutes a pressing technical challenge that needs to be addressed.

### CONTENT OF THE INVENTION

To overcome at least one of the aforementioned drawbacks, a primary objective of the present disclosure is to provide an analysis and management unit, which improves user interaction efficiency and enhances user experience.

To overcome at least one of the aforementioned drawbacks, a primary objective of the present disclosure is to provide an interactive management system and method for a PV power station, which deliver excellent interactivity and a user-friendly experience.

In order to achieve the above objectives, the present disclosure adopts the following technical solutions:
The present disclosure provides an interactive management system for a PV power station, including:
a terminal, where the terminal is provided with an interactive application (APP), and is configured to receive an instruction input by a user;
a device side, where the device side is provided at a PV power station and is configured to control and manage the PV power station;
a cloud side, where the cloud side is in communication connection with the terminal and the device side; and
an analysis and management unit, where the analysis and management unit is provided on the terminal, the device side or the cloud side, and is configured to receive, analyze, and process the instruction to generate an output instruction; and the output instruction is parsed to generate a feedback instruction or an executable control instruction; and
where, the control instruction is distributed to the terminal, the cloud side, or the device side to perform a corresponding execution action.

According to an implementation of the present disclosure, the analysis and management unit includes:
an input preprocessing module, where the input preprocessing module is configured to receive the instruction and perform feature extraction on the instruction to generate valid feature data in text form;
a context-based comprehensive processing module, where the context-based comprehensive processing module is connected to the input preprocessing module, and is configured to receive the valid feature data and retrieve and invoke a prompt matching the valid feature data to generate a comprehensive input instruction; and
a large language model (LLM), where the LLM includes an input side connected to the input preprocessing module and an output side connected to an output parsing module, and the LLM is configured to receive and process the comprehensive input instruction to generate the output instruction; and the output instruction is a natural language-based output instruction.

According to an implementation of the present disclosure, the analysis and management unit further includes a memory storage module; and the memory storage module is configured to store PV standard data and real-time interaction data, and is connected to the context-based comprehensive processing module.

According to an implementation of the present disclosure, the context-based comprehensive processing module extracts data stored in the memory storage module according to the valid feature data to generate a first input instruction; the first input instruction is the prompt; the first input instruction is fed back to the input preprocessing module; and the input preprocessing module aggregates the valid feature data and the first input instruction to generate the comprehensive input instruction.

According to an implementation of the present disclosure, the analysis and management unit further includes the output parsing module; and the output parsing module is connected to the output side of the LLM, and is configured to receive and parse the output instruction to generate the feedback instruction and/or the control instruction.

According to an implementation of the present disclosure, the memory storage module includes a permanent storage sub-module and a flash storage sub-module; the permanent storage sub-module is configured to store the PV standard data; and the flash storage sub-module is configured to store the real-time interaction data.

According to an implementation of the present disclosure, the PV standard data includes an application programming interface (API) invocation document, a product specification, and PV industry technical data.

According to an implementation of the present disclosure, the LLM includes a chat generative pre-trained transformer (ChatGPT) model.

According to an implementation of the present disclosure, construction of the LLM includes a following training process:
acquiring PV-related basic data and instruction data, constructing a domain dataset, and performing data annotation on the domain dataset to acquire an annotated domain dataset;
training a pre-trained language model through the domain dataset to update the pre-trained language model, and training the updated pre-trained language model through the annotated domain dataset to obtain a supervised fine-tuning model;
adding a classification mechanism to the supervised fine-tuning model; scoring and ranking, according to human feedback, an output from the supervised fine-tuning model with the classification mechanism added; and obtaining a reward model with a scoring mechanism;
taking the domain dataset as an input to train a reinforcement learning model, sending an obtained output result to the reward model for scoring, and feeding an obtained answer score back to the reinforcement learning model to adjust and reinforce the reinforcement learning model; and
taking the adjusted and reinforced reinforcement learning model as the LLM.

According to an implementation of the present disclosure, when the pre-trained language model is trained through the domain dataset, a portion of parameter layers of the pre-trained language model is frozen, such that during training, the domain dataset performs parameter updating only on another portion of the parameter layers of the pre-trained language model.

According to an implementation of the present disclosure, when the updated pre-trained language model is trained through the annotated domain dataset, model data is updated through a backpropagation algorithm to obtain the supervised fine-tuning model.

According to an implementation of the present disclosure, when the reinforcement learning model is adjusted and reinforced, a Kullback-Leibler (KL) divergence constraint with respect to the supervised fine-tuning model is added to a loss function of the reinforcement learning model to prevent overfitting of the reinforcement learning model.

According to an implementation of the present disclosure, the PV-related basic data includes one or more of a user manual for the PV power station, frequently asked questions and answers (Q & A), a technical document, an online source, and user feedback information; and the instruction data is acquired by parsing a system instruction set and an interface parameter of the PV power station.

According to an implementation of the present disclosure, the interactive management system further includes a routing unit, where the routing unit is connected to the analysis and management unit, and is configured to distribute the control instruction to the terminal, the cloud side, or the device side to perform the corresponding execution action.

According to an implementation of the present disclosure, the routing unit is provided on the cloud side.

According to an implementation of the present disclosure, the interactive management system further includes a plurality of invocation and execution units, where each of the invocation and execution units is connected to the routing unit, and the routing unit distributes the control instruction to the invocation and execution units on the terminal, the cloud side, or the device side to perform the corresponding execution action.

According to an implementation of the present disclosure, the invocation and execution units are provided on the terminal, the cloud side, or the device side.

According to an implementation of the present disclosure, the interactive management system further includes an action response unit, where the action response unit is configured to monitor an execution state of the execution action on the terminal, the cloud side, or the device side.

According to an implementation of the present disclosure, the action response unit includes an input terminal connected to each of the invocation and execution units for executing the execution action and an output terminal connected to the input preprocessing module; according to the control instruction, the invocation and execution units determine to invoke the terminal, the cloud side, or the device side to perform the corresponding execution action; and when the execution action is performed, the action response unit feeds back response state data including the execution state to the context-based comprehensive processing module, and the execution action is performed recursively as required.

According to an implementation of the present disclosure, the action response unit is provided on the terminal.

According to an implementation of the present disclosure, the memory storage module includes a storage management sub-module; the storage management sub-module is connected to the action response unit, and is configured to receive the response state data fed back by the action response unit and update the response state data to the real-time interaction data.

According to an implementation of the present disclosure, the real-time interaction data includes the valid feature data and the response state data.

According to an implementation of the present disclosure, the interactive management system further includes an identity configuration unit, where the identity configuration unit is connected to the context-based comprehensive processing module, and is configured to configure a working scenario and a role of the LLM according to an external input or the valid feature data.

According to an implementation of the present disclosure, the interactive management system further includes a user information management unit, where the user information management unit is connected to the context-based comprehensive processing module, and is configured to store information of a user account and information of a device bound to the user account.

According to an implementation of the present disclosure, the instruction input by the user is in the form of voice or text.

According to an implementation of the present disclosure, the output instruction generated by the analysis and management unit by receiving, analyzing, and processing the instruction is a natural language-based output instruction.

In particular, the present disclosure further provides an interactive management method for a PV power station, including following steps:
inputting, by a user, an instruction through an interactive APP on a terminal, and sending the input instruction to an analysis and management unit;
analyzing and processing, by the analysis and management unit, the instruction to generate an output instruction, and performing format parsing on the output instruction to generate a feedback instruction or an executable control instruction, where the analysis and management unit is provided on the terminal, a device side, or a cloud side;
sending the feedback instruction back to the interactive APP to enable interactive communication with the user; and
distributing, according to specific content of the control instruction, the control instruction to the terminal, the cloud side, or the device side provided at a PV power station to perform a corresponding execution action, where the control instruction is in a machine language format resulting from format parsing.

According to an implementation of the present disclosure, the analyzing and processing, by the analysis and management unit, the instruction to generate an output instruction includes:
preprocessing the instruction, and performing feature extraction on a keyword in the instruction to generate valid feature data in text form;
retrieving data from a memory storage module according to the valid feature data to generate a first input instruction, where the first input instruction is a prompt; and aggregating the first input instruction and the valid feature data to generate a comprehensive input instruction; and
reading and processing the comprehensive input instruction through an LLM to generate the output instruction.

According to an implementation of the present disclosure, the retrieving data from a memory storage module according to the valid feature data to generate a first input instruction includes:
retrieving data from the memory storage module according to the valid feature data, retrieving PV standard data and/or real-time interaction data corresponding to the valid feature data, and aggregating the retrieved PV standard data and/or real-time interaction data to generate the first input instruction.

According to an implementation of the present disclosure, the output instruction is output and parsed to generate the feedback instruction and/or the control instruction; and the control instruction is in a machine language format resulting from format parsing.

According to an implementation of the present disclosure, the preprocessing the instruction includes cleaning the input instruction.

According to an implementation of the present disclosure, the retrieving PV standard data and/or real-time interaction data corresponding to the valid feature data is implemented through a support vector retrieval method.

According to an implementation of the present disclosure, the sending the feedback instruction back to the interactive APP to enable interactive communication with the user includes:
forming new valid feature data by combining a new instruction input by the user with the feedback instruction, generating a new comprehensive input instruction during a data retrieving process, and sending the new comprehensive input instruction to the LLM for processing.

According to an implementation of the present disclosure, the distributing, according to specific content of the control instruction, the control instruction to the terminal, the cloud side, or the device side provided at a PV power station to perform a corresponding execution action includes:
decomposing an execution action with a plurality of subtasks, and recursively and automatically executing, by a system, each of the subtasks.

According to an implementation of the present disclosure, after the analysis and management unit analyzes and processes the instruction to generate the valid feature data, a working scenario and a role of the LLM are automatically configured according to the valid feature data.

According to an implementation of the present disclosure, when the user inputs the instruction through the interactive APP on the terminal, a working scenario and a role of the LLM are manually configured by manually inputting an identity configuration parameter.

According to an implementation of the present disclosure, when the analysis and management unit retrieves data from the memory storage module according to the valid feature data, information of a user account and information of a device bound to the user account are retrieved, and the information of the user account and the information of the device are aggregated into the first input instruction.

In particular, the present disclosure further provides an analysis and management unit, where the analysis and management unit enables interactive communication with a user through an interactive APP; the analysis and management unit is configured to receive, analyze, and process an instruction input by the user to generate an output instruction; the output instruction is parsed to generate a feedback instruction or an executable control instruction; the feedback instruction is sent back to the interactive APP to enable the interactive communication with the user; and the control instruction is distributed to a terminal, a cloud side, or a device side to perform a corresponding execution action;
the analysis and management unit includes:
an input preprocessing module, where the input preprocessing module is configured to receive the instruction and perform feature extraction on the instruction to generate valid feature data;
a context-based comprehensive processing module, where the context-based comprehensive processing module is connected to the input preprocessing module, and is configured to receive the valid feature data and retrieve and invoke data matching the valid feature data to generate a comprehensive input instruction; and
an LLM, where the LLM includes an input side connected to the input preprocessing module, and the LLM is configured to receive and process the comprehensive input instruction to generate the output instruction.

According to an implementation of the present disclosure, the analysis and management unit further includes a memory storage module; the memory storage module is configured to store PV standard data and real-time interaction data, and is connected to the context-based comprehensive processing module; and the PV standard data includes an API invocation document, a product specification, and PV industry technical data.

According to an implementation of the present disclosure, the memory storage module includes a permanent storage sub-module and a flash storage sub-module; the permanent storage sub-module is configured to store the PV standard data; and the flash storage sub-module is configured to store the real-time interaction data.

According to an implementation of the present disclosure, the context-based comprehensive processing module extracts data stored in the memory storage module according to the valid feature data to generate a first input instruction and feeds the first input instruction back to the input preprocessing module; and the input preprocessing module aggregates the valid feature data and the first input instruction to generate the comprehensive input instruction.

According to an implementation of the present disclosure, the analysis and management unit further includes an output parsing module; and the output parsing module is connected to an output side of the LLM, and is configured to receive and parse the output instruction to generate the feedback instruction and/or the control instruction.

According to an implementation of the present disclosure, construction of the LLM includes a following training process:
acquiring PV-related basic data and instruction data, constructing a domain dataset, and performing data annotation on the domain dataset to acquire an annotated domain dataset;
training a pre-trained language model through the domain dataset to update the pre-trained language model, and training the updated pre-trained language model through the annotated domain dataset to obtain a supervised fine-tuning model;
adding a classification mechanism to the supervised fine-tuning model; scoring and ranking, according to human feedback, an output from the supervised fine-tuning model with the classification mechanism added; and obtaining a reward model with a scoring mechanism;
taking the domain dataset as an input to train a reinforcement learning model, sending an obtained output result to the reward model for scoring, and feeding an obtained answer score back to the reinforcement learning model to adjust and reinforce the reinforcement learning model; and
taking the adjusted and reinforced reinforcement learning model as the LLM.

According to an implementation of the present disclosure, when the pre-trained language model is trained through the domain dataset, a portion of parameter layers of the pre-trained language model is frozen, such that during training, the domain dataset performs parameter updating only on another portion of the parameter layers of the pre-trained language model.

According to an implementation of the present disclosure, when the updated pre-trained language model is trained through the annotated domain dataset, model data is updated through a backpropagation algorithm to obtain the supervised fine-tuning model.

According to an implementation of the present disclosure, when the reinforcement learning model is adjusted and reinforced, a KL divergence constraint with respect to the supervised fine-tuning model is added to a loss function of the reinforcement learning model to prevent overfitting of the reinforcement learning model.

According to an implementation of the present disclosure, the PV-related basic data includes one or more of a user manual for a PV power station, frequently asked Q & A, a technical document, an online source, and user feedback information; and the instruction data is acquired by parsing a system instruction set and an interface parameter of the PV power station.

In particular, the present disclosure further provides a computing device, including a memory, a processor, and a computer program stored in the memory and executable on the processor, where the computer program is executed by the processor to implement the aforementioned method.

The present disclosure further provides a computer-readable storage medium, where the computer-readable storage medium is configured to store a computer program, and the computer program is executed by a processor to implement the aforementioned method. The computer-readable storage medium is preferably a non-transitory readable storage medium.

Compared with the prior art, the interactive management system and method for a PV power station according to the present disclosure have the following advantages and beneficial effects:

The interactive management system for a PV power station according to the present disclosure simplifies user input at the terminal. This greatly reduces input requirements, thereby lowering the user threshold for the interactive management system for a PV power station, and can better achieve all-weather and comprehensive management of the PV power station while enhancing user experience.

Moreover, the present disclosure innovatively introduces the LLM (such as the ChatGPT model), which includes an input side for receiving the comprehensive input instruction in text form and an output side for providing the natural language-based output instruction. The front-end input and back-end processing and output are based on natural language processing, which better aligns with the usage requirements of conventional users. In the final specific execution, the natural language-based output instruction is converted into a corresponding format for specific execution, reducing the processing difficulty of the management method. Furthermore, the data sources during processing are more diverse, resulting in enhanced processing capability of the system and enabling the method to address a wider range of problems.

### DESCRIPTION OF THE DRAWINGS

Some specific embodiments of the present disclosure will be described in detail below in an illustrative rather than restrictive manner with reference to the drawings. The same reference numerals in the drawings refer to like or similar components or parts. Those skilled in the art should understand that the drawings are not plotted to scale. In the drawings:
FIG. 1 is a structural block diagram of an interactive management system for a PV power station according to an embodiment of the present disclosure;
FIG. 2 is a structural diagram of a computing device according to another embodiment of the present disclosure;
FIG. 3 is a structural diagram of a computer-readable storage medium according to another embodiment of the present disclosure;
FIG. 4 is a flowchart of constructing an LLM according to an embodiment of the present disclosure;
FIG. 5 is a comparative diagram of graphics card memory usage between a conventional training method and a method using zero redundancy optimizer (ZeRO) memory optimization technology;
FIG. 6 is a schematic diagram of a workflow of a start-up method for a PV power station according to an implementation of the present disclosure;
FIG. 7 illustrates an interface of the interactive management system for performing knowledge questioning and answering in the PV field according to an implementation of the present disclosure;
FIG. 8 illustrates an interface of the interactive management system for performing multi-modal questioning and answering according to an implementation of the present disclosure;
FIG. 9 illustrates an interface of the interactive management system for performing questioning and answering on real-time information of the PV power station according to an implementation of the present disclosure;
FIG. 10 illustrates an interface of the interactive management system for performing mode configuration after receiving an instruction according to an implementation of the present disclosure;
FIG. 11 illustrates an interface of the interactive management system for displaying data in the form of a chart according to an implementation of the present disclosure; and
FIG. 12 is a schematic diagram of an interface of an interactive APP according to an embodiment of the present disclosure.

### SPECIFIC IMPLEMENTATIONS

The following clearly and completely describes the technical solutions of the present disclosure with reference to drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In addition, the technical features involved in the various implementations of the present disclosure described below may be combined with each other as long as they do not constitute a conflict with each other.

### Embodiment 1

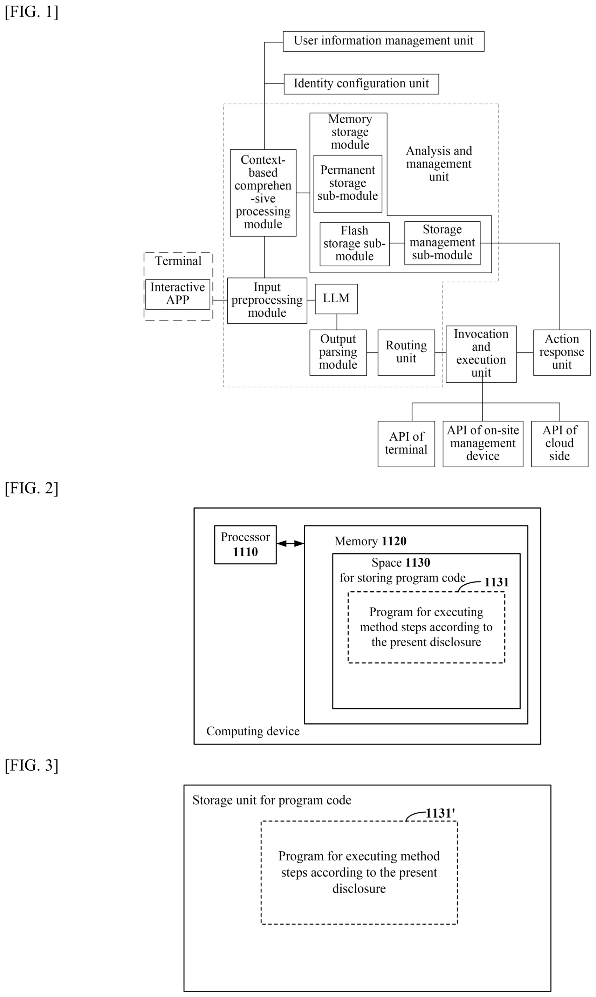

The embodiment provides an interactive management system for a PV power station, as shown in FIG. 1, which includes a terminal, a cloud side, and a device side.

The terminal is provided with an interactive APP, and is configured to receive an instruction input by a user.

The cloud side is in communication connection with the terminal and the device side. In the embodiment, the cloud side is provided with an analysis and management unit. The analysis and management unit is configured to receive, analyze, and process the instruction to generate a natural language-based output instruction, and the output instruction is parsed to generate a feedback instruction or an executable control instruction.

The device side is provided at a PV power station and is configured to control and manage the PV power station. Generally, the PV power station includes equipment such as a solar cell array, a storage battery pack, a charge-discharge controller, an inverter, an alternating current (AC) distribution cabinet, and a solar tracking control system. In the embodiment, the device side refers to the aforementioned equipment such as the charge-discharge controller, the inverter, the AC distribution cabinet, and the solar tracking control system.

The control instruction is distributed to the terminal, the cloud side, or the device side to perform a corresponding execution action.

In addition, in the embodiment, the analysis and management unit can not only be provided on the cloud side, but can also be provided on the terminal or the device side, which is adjustable according to the user's usage requirement and data processing performance of each side. Moreover, the functional modules in the analysis and management unit can be reasonably split and arranged on one of the terminal, the device side, and the cloud side. That is to say, the processing of the analysis and management unit is achieved by combining the functional modules of the terminal, the device side, or the cloud side, which is also technically feasible.

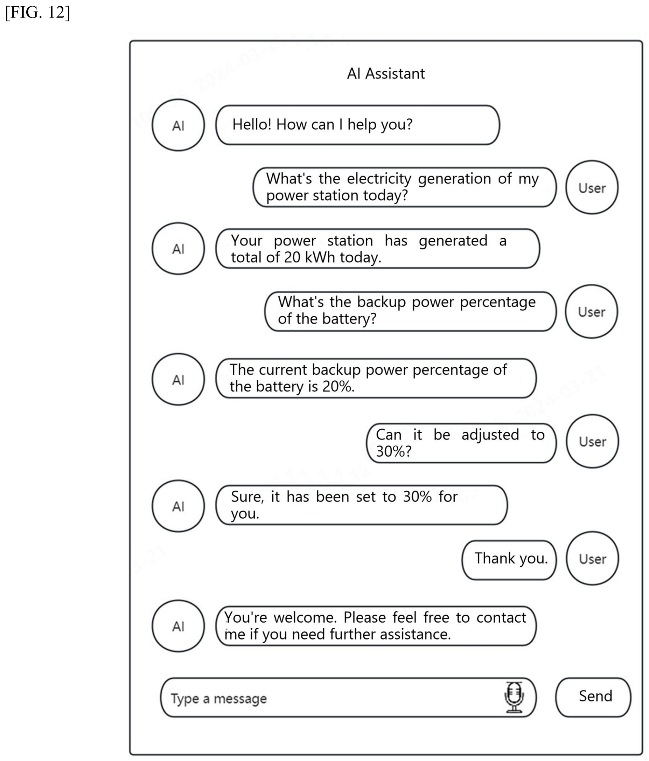

The instruction input by the user at the terminal is in the form of voice or text. It is not difficult to find that in the embodiment, the initial user input is a natural language input, and the output instruction generated through processing by the analysis and management unit is a natural language-based output instruction. Ordinary communication between the user and the terminal (not involving the control instruction for specific execution) is based on natural language. As shown in FIG. 12, which illustrates an interface of the interactive APP, the user can completely input the instruction through natural language to conduct accurate and professional interaction with a background, making the communication smoother and more convenient.

That is to say, the interactive management system for a PV power station in the embodiment simplifies user input at the terminal, greatly reducing input requirements and thereby lowering the user threshold for the interactive management system for a PV power station. The user can perform guided management operations without satisfying the operational requirements for conventional technicians. This enhances user experience, enables the user to conduct data interaction with the cloud side and the device side anytime and anywhere, and better achieves all-weather and comprehensive management of the PV power station.

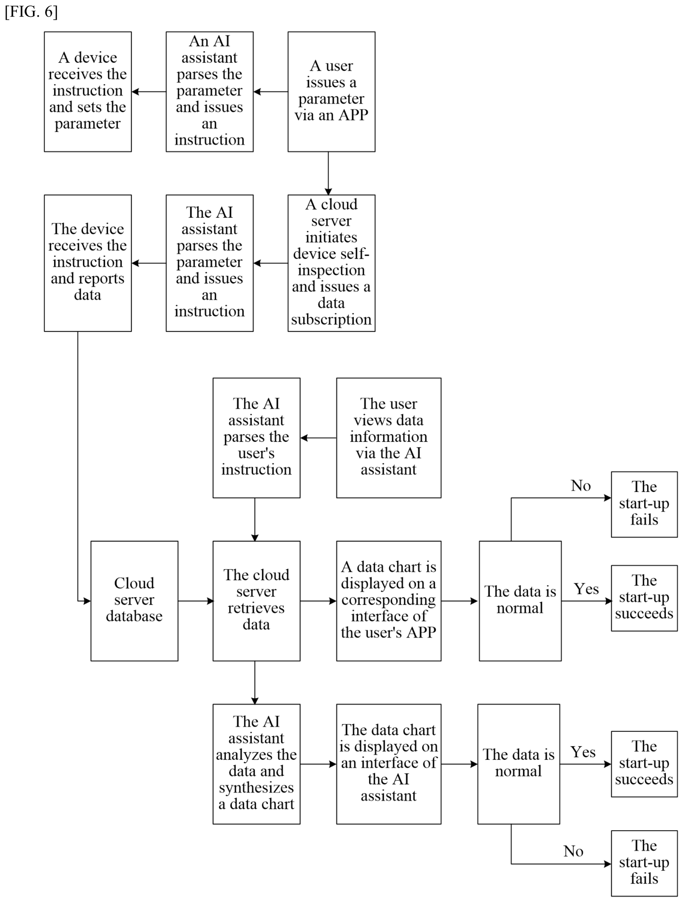

Taking voice input by the user for start-up of the PV power station as an example, as shown in FIG. 6, the user (a power station owner or technician) wakes up the interactive APP on the terminal through voice, and tells the interactive APP "I want to start up the station" through voice interaction. The interactive APP retrieves start-up related data from the cloud side and fills in default data. At the interactive APP, the user can modify parameters of the PV power station one by one through voice interaction, and invoke an API of the device side (such as a PV inverter) according to the modified parameters to complete setting or modification of corresponding parameters. That is to say, the interactive APP can automatically execute a series of start-up operations according to the user's voice input requirements. If there is a problem midway, the interactive APP can inform the user through a voice broadcast or a text dialog box, etc., and provide a solution.

It can be understood that preferably, the instruction input by the user is in voice form, which is more free and can give the user a better experience.

In an implementation, the analysis and management unit includes:
an input preprocessing module, where the input preprocessing module is configured to receive the instruction and perform feature extraction on the instruction to generate valid feature data;
a context-based comprehensive processing module, where the context-based comprehensive processing module is connected to the input preprocessing module, and is configured to receive the valid feature data and retrieve and invoke a prompt matching the valid feature data to generate a comprehensive input instruction; and
an LLM, where the LLM includes an input side connected to the input preprocessing module and an output side connected to an output parsing module, and the LLM is configured to receive and process the comprehensive input instruction to generate the natural language-based output instruction.

The input preprocessing module can clean and filter the instruction input by the user. It should be noted that some instructions input by the user are invalid or non-compliant, and are not related to the specific operation and management of the PV power station. Such instructions need to be filtered out and the user is requested to re-enter instructions until valid feature data (real and legal) can be generated. The context-based comprehensive processing module, as the name implies, can play a role of connecting the preceding (introducing the valid feature data and the basis of other previous operations) and the following (searching and retrieving corresponding data for the introduced new valid feature data), so as to merge and construct the comprehensive input instruction.

The valid feature data itself is a language feature, i.e., text, and the data searched and retrieved is from an API invocation document, a product specification, PV industry technical data, and other aspects, and is also composed of text. Therefore, the obtained comprehensive input instruction exists in text form. The comprehensive input instruction is input into the LLM for training and integration to generate the natural language-based output instruction. According to processing requirements, the output instruction can be converted into voice, i.e., the feedback instruction mentioned above (i.e. voice-form feedback instruction in the embodiment), to interact with the user. According to processing requirements, the output instruction can also be output and parsed into a control instruction for controlling the terminal, the cloud side, or the device side.

In the embodiment, the LLM is a currently popular ChatGPT model, which is a natural language processing tool driven by artificial intelligence (AI) technology, capable of performing conversations by understanding and learning human language, and also capable of interacting according to the context of the conversation. Therefore, in the embodiment, the context-based comprehensive processing module outputs the comprehensive input instruction to the non-word and one-word model to generate the natural language-based output instruction. The ChatGPT model can either be trained using an open-source algorithm to obtain a trained model, or deployed after being fine-tuned based on an open-source model. Taking start-up as an example, fine-tuning can convert the start-up process into a series of conversations, which are taken as training data to fine-tune the LLM, thereby making it more suitable for the start-up scenario.

The present disclosure obtains the LLM through training with PV-related data to improve the model's ability to understand and apply professional knowledge in the PV field. The optimized LLM is accurately and effectively embedded into the PV management process, enabling intelligent interaction between the user and the system, and providing intelligent problem identification and resolution functions. Thus, the user can raise questions or give instructions in natural language, and the system can accurately understand them and provide corresponding answers or operational suggestions.

For questions in the PV field, the prior art often needs to rely on experts for offline or online questioning and answering, but whether online or offline, there are problems such as incomplete knowledge, untimely questioning and answering, and inaccurate answers. Faced with these problems, directly applying the LLM to practical scenarios, such as a questioning and answering system in the PV field, will also encounter difficulties, because the LLM cannot use external knowledge for reference questioning and answering. For example, for questions such as "What does the alarm of Power Station A mean", "What is the power of the inverter of Model B", and "What is the electricity generation of Power Station C today", conventional LLMs may produce answers that do not conform to the actual situation. In addition, the PV power station management system also needs to have equipment control capabilities to achieve monitoring, regulation, and management of PV equipment. However, the prior art has certain limitations in this aspect, such as lack of intelligent equipment control strategies and inability to respond to changes in equipment state in real time.

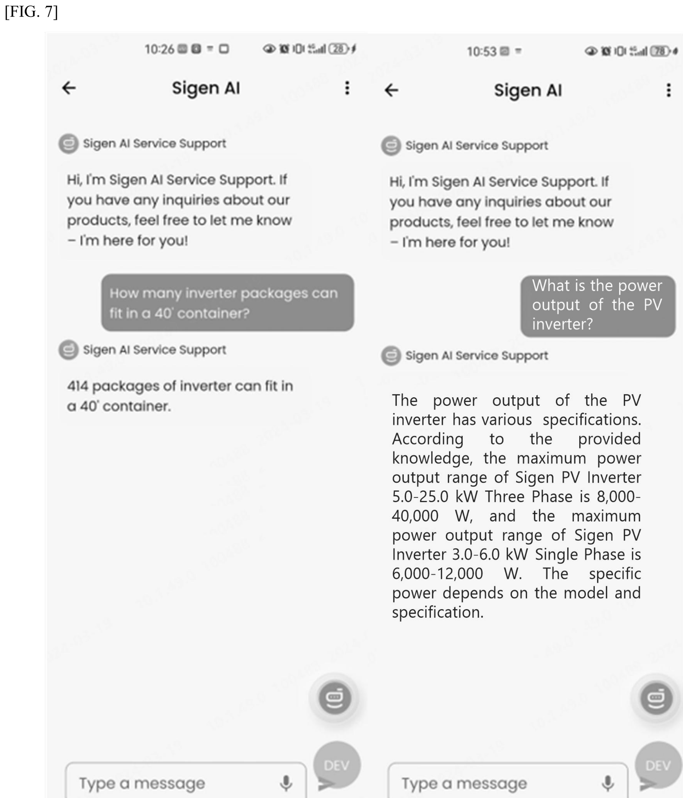

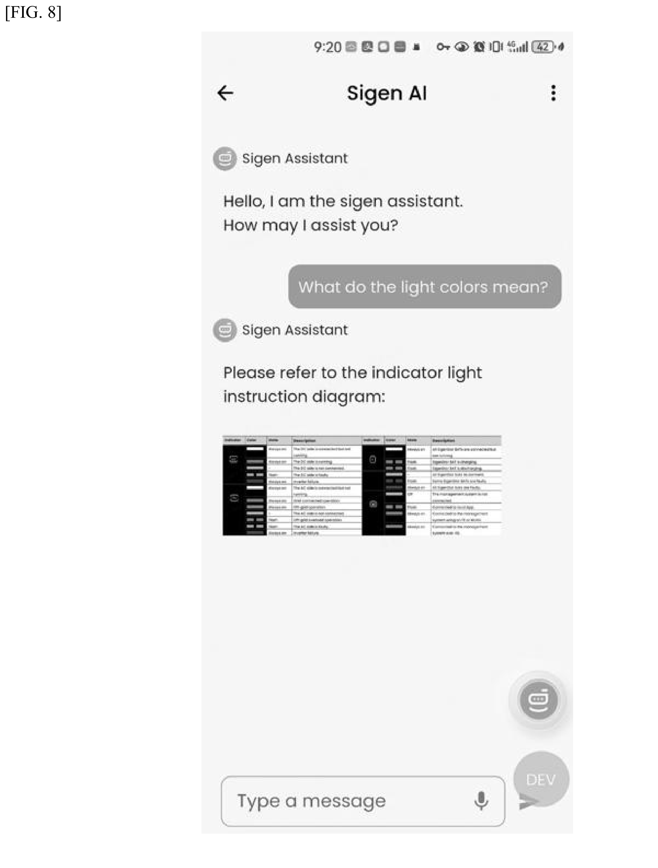

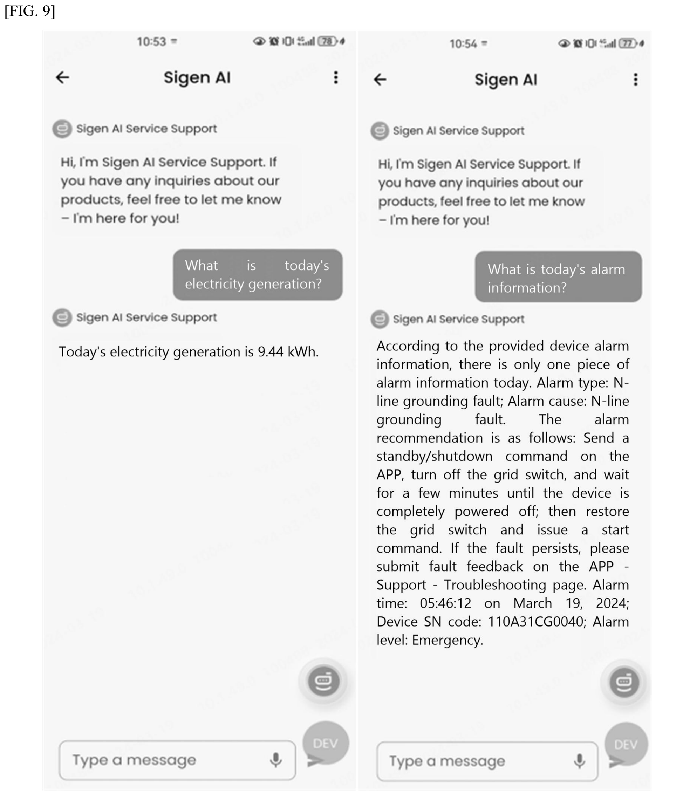

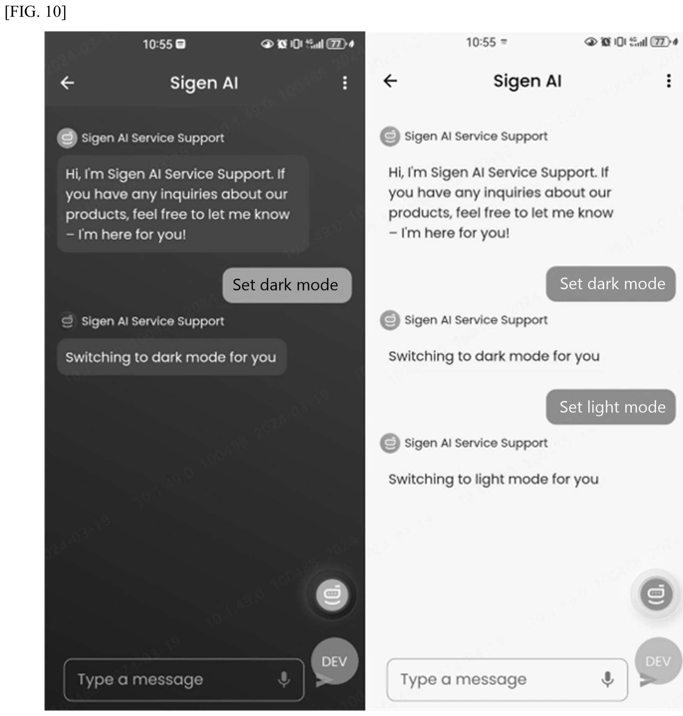

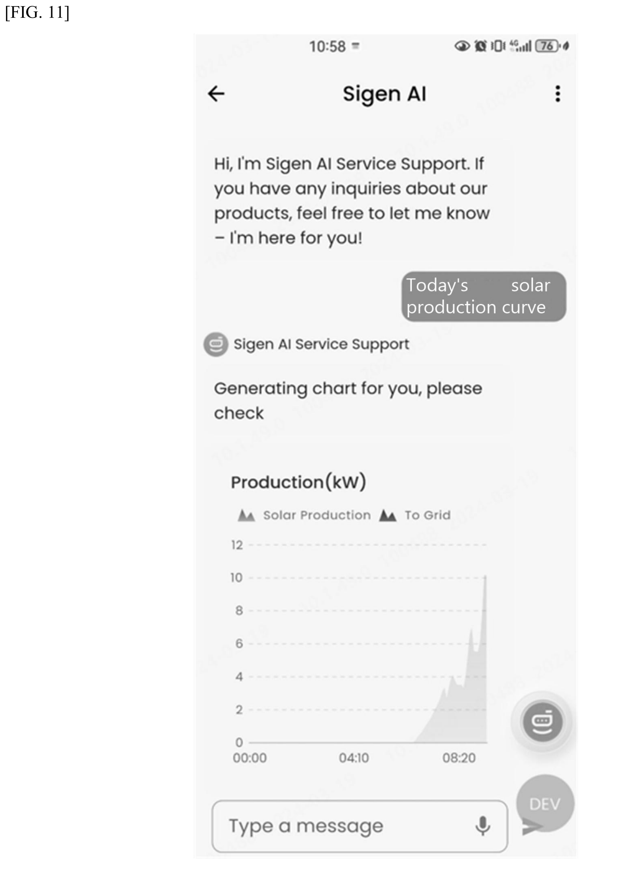

In the present disclosure, the interactive APP can display various working scenarios. FIG. 7 illustrates an interface of the interactive management system of the present disclosure for performing knowledge questioning and answering in the PV field. For example, when the user asks "What is the power output of a PV inverter", the interactive management system retrieves relevant information from the PV industry technical data and displays it, and waits for a further inquiry from the user. FIG. 8 illustrates an interface of the interactive management system of the present disclosure for performing multi-modal questioning and answering, where the state of an indicator light is shown in the figure. FIG. 9 illustrates an interface for performing questioning and answering on real-time information of the PV power station. For example, according to the user's input instruction "What is today's electricity generation", the interactive management system quickly captures the electricity generation data of the PV power station today and displays it. For another example, when the user inputs "What is today's alarm information", after analyzing and processing this instruction, the interactive management system captures the current day's alarm information about the PV power station as a feedback instruction and displays it. FIG. 10 illustrates an interface of the interactive management system of the present disclosure for performing mode configuration after receiving an instruction. This interface quickly switches the display mode of the interface according to the user's input instruction "Set dark mode" or "Set light mode". FIG. 11 illustrates an interface of the interactive management system of the present disclosure for displaying data in the form of a chart. This interface can accurately reflect the current electricity generation status of the day in the form of the chart according to the user's input instruction "Today's solar production curve".

Therefore, the prior art has problems such as incomplete knowledge, inaccurate answers, and insufficient equipment control capabilities in the questioning and answering system and equipment control in the PV field. To solve these problems, the present disclosure proposes a fine-tuning and training method for an LLM based on domain-specific knowledge, and a corresponding system. The present disclosure aims to improve the questioning and answering ability of the LLM in the field of a PV power station management system, optimize the interaction efficiency and user experience of the system, enhance the equipment control capability of the system, and achieve intelligent monitoring and management of PV equipment.

The application scope of the interactive management system of the present disclosure covers all aspects in the interactive management process of the PV power station, including equipment fault diagnosis, user inquiry and response, data monitoring and analysis, etc. By combining the LLM with the PV power station management system, the present disclosure can achieve rapid application and promotion of intelligent technologies in the PV field, providing strong support for the intelligent development of the PV field.

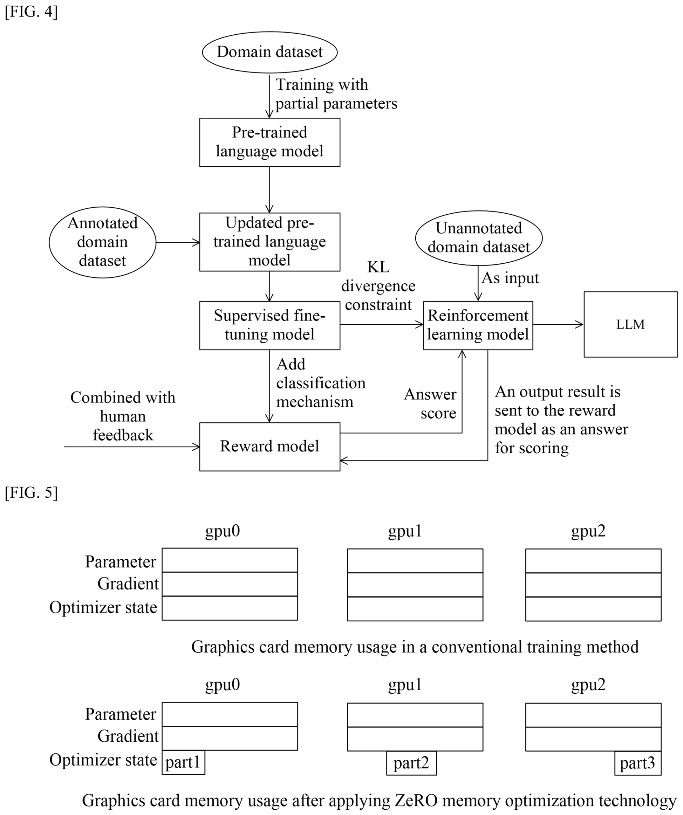

In an implementation, as shown in FIG. 4, construction of the LLM includes a following training process.

PV-related basic data and instruction data are acquired, a domain dataset is constructed, and data annotation is performed on the domain dataset to acquire an annotated domain dataset.

A pre-trained language model is trained through the domain dataset to update the pre-trained language model, and the updated pre-trained language model is trained through the annotated domain dataset to obtain a supervised fine-tuning model.

A classification mechanism is added to the supervised fine-tuning model; according to human feedback, an output from the supervised fine-tuning model with the classification mechanism added is scored and ranked; and a reward model with a scoring mechanism is obtained.

The domain dataset is taken as an input to train a reinforcement learning model, an obtained output result is sent to the reward model for scoring, and an obtained answer score is fed back to the reinforcement learning model to adjust and reinforce the reinforcement learning model.

The adjusted and reinforced reinforcement learning model is taken as the LLM.

In this embodiment, the construction of the domain dataset, namely data preparation, includes data acquisition, data cleaning, data annotation, data processing, and dataset division. Specifically:

Data acquisition: First, sources for data acquisition are determined. The PV-related basic data may include, but are not limited to, a user manual for the PV system, frequently asked Q & A, a technical document, an online source (such as forum posts; general domain knowledge and more real-time and specific Q & A can be acquired from professional websites, forums, social media, and other channels related to PV systems), and user feedback information. The instruction data is acquired by parsing a system instruction set and an interface parameter of a specific PV power station.

Taking the construction of the basic data using frequently asked Q & A as an example, for instance, the corresponding question input in natural language serves as Content, and the corresponding answer serves as Target. The following are examples of some Content and corresponding Target:

| Content | Target |
|---|---|
| "content": "How the batteries are stored once they arrive at the warehouse?" | "target": "If the equipment is not to be installed or used immediately, the storage environment |
| | needs to meet the following conditions |
| | a. Storage SOC: 20%~50%SOC. Charge and discharge the battery every 3 months. |
| | b. Storage temperature: -25°C~35°C(less than 6 months) or 35°C~60°C(less than 1 month) |
| | c. Storage humidity: 5%RH~95%RH(no condensation). Do not install the battery if any moist |
| | or condensation is found. |
| | d. Place the equipment in a cool place where away from direct sunlight and rain |
| | e. Keep the equipment away from flammable, explosive, and corrosive matters" |
| "content": "How many inverter packages can fit in a 40' container?" | "target": "414 packages of inverter can fit in a 40' container." |
| "content": "How many battery pack packages can fit in a pallet?" | "target": "For one pallet, there are 6 battery pack packages can be stacked on it." |

Taking the system instruction set and the interface parameter of the PV power station as an example, the corresponding system instruction input in natural language serves as Content, and the corresponding interface parameter serves as Target. The following are examples of some Content and corresponding Target:

| Content | Target |
|---|---|
| "content": "Set the maximum Internet power to 10 kW" | "target": "{function: device control, target: SigenStor, param: 10, unit: kW}" |
| "content": "Set energy saving mode" | "target": "{function: device control, target: Sigen station, param: Na, unit: Na}" |

Data cleaning: As the acquired basic data may include a large amount of noise and invalid information, data cleaning and preprocessing are required. Data cleaning includes steps such as removal of duplicate data, correction of erroneous information, and filtering of irrelevant information to ensure data quality and accuracy.

Data annotation: After data cleaning, the cleaned data needs to be annotated such that the model can accurately understand the meaning and relationships of the data during training. Data annotation work may include pairing Q & A, classifying and labeling instruction data, etc. This ensures that the annotated domain dataset can provide effective supervisory signals for the model.

Data processing: According to the specific training needs of each model, further processing and transformation of the data may also be required. The further processing and transformation include operations such as tokenization, vectorization, and serialization of text data to facilitate model input and processing.

Dataset division: Finally, the domain dataset needs to be divided into a training set, a validation set, and a test set. The annotated domain dataset also needs to be divided into a training set, a validation set, and a test set for model training, evaluation, and testing. Typically, the training set is used for model training, the validation set is used for adjusting model hyperparameters and structure, and the test set is used for final evaluation of model performance and generalization ability.

Through the above steps, data related to PV system Q & A or instructions can be effectively prepared, laying a reliable foundation for subsequent model training and implementation.

Preferably, when the pre-trained language model is trained through the domain dataset, a portion of parameter layers of the pre-trained language model is frozen, such that during training, the domain dataset performs parameter updating only on another portion of the parameter layers of the pre-trained language model. Then, when the updated pre-trained language model is trained through the annotated domain dataset, model data is updated through a backpropagation algorithm to obtain the supervised fine-tuning model.

When the reinforcement learning model is adjusted and reinforced, a KL divergence constraint with respect to the supervised fine-tuning model is added to a loss function of the reinforcement learning model to prevent overfitting of the reinforcement learning model.

During the training process of the LLM, each graphics card is primarily occupied by two types of content: one is model state data, and the other is other data. The model state data includes model parameters (fp16), model gradients (fp16), and Adam states (fp32 momentum and fp32 variance), while the rest of the data includes activations, temporary buffers, and graphics processing unit (GPU) memory fragments. Among the model state parameters, optimizer state parameters account for the largest proportion. For storage optimization of model states, zero redundancy optimizer (ZeRO) technology is adopted, which splits the model parameters into a plurality of shards such that each worker node only needs to store a portion of the parameters. Specifically, the optimizer states are divided into 1/N parts and distributed across N graphics cards. During forward propagation and backpropagation, the optimizer is not required, and only gradients are needed. At this stage, gradients from other parts are concatenated to form complete gradients for backpropagation. After the completion of forward propagation and backpropagation, the optimizer is then invoked for parameter updating. At this point, optimizer parameters and complete gradients from a plurality of cards are aggregated to perform parameter updating.

FIG. 5 is a comparative diagram of graphics card memory usage between a conventional training method and the method using ZeRO memory optimization technology. Generally, under conventional data parallel processing, each process uses identical parameters for training and also holds a complete copy of the optimizer states, which also consumes a large amount of memory (1 float16=2 bytes, 1 float32=4 bytes). In a mixed-precision scenario, taking a model with parameter count of Ψ and the Adam optimizer as an example, the Adam optimizer needs to store: backups of parameters and gradients in float16 precision, each occupying 2Ψ bytes of memory; and backups of parameters, momentum, and variance in float32 precision, corresponding to 3 copies of 4Ψ memory usage. Ultimately, a total of 2ΨP+2Ψ+3*4Ψ=16Ψ bytes of memory is required. By using the ZeRO-1 technology, this memory usage can be reduced to (2Ψ+2Ψ+3*4Ψ/n) bytes. For example, when n=3, only 8Ψ bytes of memory are needed.

In addition, to improve training efficiency and resolve the issue of floating-point underflow, mixed-precision training is employed. During training, gradients, parameters, and data used in forward propagation and backpropagation are all in float16 format, while the optimizer retains a copy of parameters in float32 format. During parameter updating, the updated results are saved as float32 parameters, which are then converted to float16 format for forward propagation and backpropagation.

The formatted conversion from the output instruction to the control instruction is achieved by the output parsing module in the analysis and management unit. The output parsing module receives and parses the output instruction to generate the feedback instruction and/or the control instruction. The output parsing module also generates the feedback instruction to interact with the user, which facilitates the system to further confirm the user's instruction objective. In the process of confirmation, the operation of the user is guided until a final correct control instruction is output. Of course, it should be noted that the control instruction is issued from time to time as needed in this process, because the monitoring and management control of the PV power station usually cannot be completed through one control.

In an implementation, the analysis and management unit further includes a memory storage module; and the memory storage module is configured to store PV standard data and real-time interaction data, and is connected to the context-based comprehensive processing module. Specifically, the memory storage module includes a permanent storage sub-module and a flash storage sub-module; the permanent storage sub-module is configured to store the PV standard data; and the flash storage sub-module is configured to store the real-time interaction data. The PV standard data may include an API invocation document, a product specification, PV industry technical data, etc., and the real-time interaction data may include the valid feature data and response state data corresponding to the execution of the control instruction.

The context-based comprehensive processing module extracts data stored in the memory storage module according to the valid feature data to generate a first input instruction. The first input instruction is the prompt. The first input instruction is fed back to the input preprocessing module. The input preprocessing module aggregates the valid feature data and the first input instruction to generate the comprehensive input instruction. The valid feature data obtained by extracting the instruction input by the user and the prompt are input to the LLM. The prompt includes a list of control instructions and the output format of each control instruction (for example: Access power station list page {goPath: /station-list}, Set dark mode {setTheme: dark}, Set backup capacity 30% {setBackupCapacity: 30%}). The LLM, with strong understanding and reasoning capabilities, can complete the matching between the valid feature data and the prompt (mainly the control instruction) and output the comprehensive input instruction according to the agreed format.

The interactive management system further includes a user information management unit. The user information management unit is connected to the context-based comprehensive processing module, and is configured to store information of a user account and information of a device bound to the user account.

For example, after the instruction "I want to start up the station" is input, as shown in FIG. 6, the input preprocessing module extracts the user's account information and the valid voice feature data of "start up the station". The context-based comprehensive processing module retrieves the account information and the bound device information, retrieves start-up related data by querying the product specification of the corresponding model of the equipment from the permanent storage sub-module, and sends the account information, the bound device information, and the start-up data as the first input instruction to the input preprocessing module. The input preprocessing module then sends the valid voice feature data of "start up the station" together with the first input instruction as the comprehensive input instruction to the LLM, and the LLM generates the natural language-based output instruction. The output instruction is completely executed (interaction of the feedback instruction, issuance and execution of the control instruction), and finally the start-up is completed.

In an implementation, the interactive management system further includes a routing unit for distributing the control instruction. The routing unit is provided on the cloud side. The routing unit is connected to the analysis and management unit, and is configured to distribute the control instruction to the terminal, the cloud side, or the device side to perform the corresponding execution action.

After the output parsing module receives and parses the output instruction to generate the control instruction, the system transmits the control instruction to the routing unit. The routing unit stores configuration information of invocation and execution units corresponding to each control instruction, and transmits the control instruction to the corresponding invocation and execution units according to the configuration information for instruction execution (for example: goPath and setTheme instructions need to be transmitted to the interactive APP for corresponding page navigation or theme configuration, while the setBackupCapacity instruction needs to be transmitted to an energy storage device on the device side for parameter setting).

In an implementation, the interactive management system further includes a plurality of invocation and execution units; and the invocation and execution units are provided on the terminal, the cloud side, or the device side. Each of the invocation and execution units is connected to the routing unit, and the routing unit distributes the control instruction to the invocation and execution units on the terminal, the cloud side, or the device side to perform the corresponding execution action. The invocation and execution units interface with an API of the terminal, the cloud side, or the device side to enable operations on the terminal, the cloud side, or the device side.

In an implementation, the interactive management system further includes an action response unit provided on the terminal. The action response unit is configured to monitor an execution state of the execution action on the terminal, the cloud side, or the device side. Specifically, the action response unit includes an input terminal connected to each of the invocation and execution units for executing the execution action and an output terminal connected to the input preprocessing module. According to the control instruction, the invocation and execution units determine to invoke the terminal, the cloud side, or the device side to perform the corresponding execution action. When the execution action is performed, the action response unit feeds back response state data including the execution state to the context-based comprehensive processing module, and the execution action is performed recursively as required.

In addition, in order to better manage the response state data, a storage management sub-module is further provided in the memory storage module, and the storage management sub-module is connected to the action response unit. The storage management sub-module is configured to receive the response state data fed back by the action response unit and update the response state data to the real-time interaction data, where the real-time interaction data includes the valid feature data and the response state data.

It should be noted that the LLM usually has several different roles, such as installation personnel, after-sales technicians, power management personnel, customer service agents, intelligent assistants, and intelligent customer service agents. For example, during start-up, the LLM plays the role of "installation personnel". In order to configure the role of the LLM when the user inputs the instruction, the interactive management system further includes an identity configuration unit. The identity configuration unit is connected to the context-based comprehensive processing module, and is configured to configure a working scenario and a role of the LLM according to an external input or the valid feature data. The external input is generally referred to as manual configuration, and configuration after extraction of the valid feature data is automatic configuration. For example, capturing the feature of "start up the station" (also referred to as the wake-up word) automatically configures the LLM to act as installation personnel. In addition, a fine-tuning module can be provided to adjust the LLM to make it more suitable for the current scenario.

In addition, it should be noted that the aforementioned connection relationships include, but are not limited to, electrical connection and communication connection forms, as long as data and signal transmission can be achieved, which all fall within the protection scope of the present disclosure.

### Embodiment 2

The embodiment provides an interactive management method for a PV power station, which is based on the system framework described in Embodiment 1, and includes the following steps.

The user inputs the instruction through the interactive APP on the terminal. In the embodiment, the instruction is a voice instruction, and the input instruction is sent to the analysis and management unit at the cloud side.

The analysis and management unit analyzes and processes the instruction to generate the natural language-based output instruction, and then performs format parsing on the output instruction to generate the feedback instruction or the control instruction.

The feedback instruction is sent back to the interactive APP to enable interactive communication with the user. In the process of interactive communication, new valid feature data is generated by combining a new instruction input by the user with the feedback instruction. Then during a data retrieving process, a new comprehensive input instruction is generated and sent to the LLM for processing.

The control instruction is in a machine language format resulting from format parsing. According to specific content of the control instruction, the control instruction is distributed to the terminal, the cloud side, or the device side provided at the PV power station, to perform the corresponding execution action.

In an implementation, the process that the analysis and management unit analyzes and processes the instruction to generate the natural language-based output instruction includes the following steps.

The instruction is preprocessed, and feature extraction is performed on a keyword in the instruction to generate the valid feature data. Still taking start-up as an example, the keyword is undoubtedly "start up the station".

According to the valid feature data, data is retrieved from the memory storage module to generate the first input instruction, and the first input instruction and the valid feature data are aggregated to generate the comprehensive input instruction.

The comprehensive input instruction is read and processed through the LLM to generate the natural language-based output instruction.

The valid feature data obtained by extracting the instruction input by the user and the prompt are input to the LLM. The prompt includes a list of control instructions and the output format of each control instruction (for example: Access power station list page {goPath: /station-list}, Set dark mode {setTheme: dark}, Set backup capacity 30% {setBackupCapacity: 30%}). The LLM, with strong understanding and reasoning capabilities, can complete the matching between the valid feature data and the prompt (mainly the control instruction) and output the comprehensive input instruction according to the agreed format.

After the instruction "I want to start up the station" is input, first, the user's account information and the valid voice feature data of "start up the station" are extracted. Then the account information and the bound device information are retrieved, and the product specification of the corresponding model of the equipment is retrieved according to the device information to query and retrieve start-up related data. The account information, the bound device information, and the start-up data are taken as the first input instruction. Then the valid voice feature data of "start up the station" together with the first input instruction are sent as a comprehensive input instruction to the LLM, and the LLM generates the natural language-based output instruction. The output instruction is completely executed (interaction of the feedback instruction, issuance and execution of the control instruction), and finally the start-up is completed.

In an implementation, the process that the data is retrieved from the memory storage module according to the valid feature data to generate a first input instruction includes the following steps.

Data is retrieved from the memory storage module according to the valid feature data, PV standard data and/or real-time interaction data corresponding to the valid feature data is retrieved, and the retrieved PV standard data and/or real-time interaction data is aggregated to generate the first input instruction. The retrieving of the PV standard data and/or real-time interaction data corresponding to the valid feature data is implemented through a support vector retrieval method.

In addition, it should be supplemented that in the process of distributing the control instruction to the terminal, the cloud side, or the device side provided at the PV power station according to the specific content of the control instruction to perform the corresponding execution action, there may be an execution action with a plurality of subtasks. The execution action with a plurality of subtasks is decomposed, and the system automatically executes each of the subtasks recursively.

For the configuration of the working scenario and role of the LLM, there are two forms: automatic configuration and manual configuration.

As for automatic configuration, after the analysis and management unit analyzes and processes the instruction to generate the valid feature data, the working scenario and role of the LLM are automatically configured according to the valid feature data.

As for manual configuration, when the user inputs the instruction through the interactive APP on the terminal, an identity configuration parameter is manually input to manually configure the working scenario and role of the LLM.

In addition, when the analysis and management unit retrieves data from the memory storage module according to the valid feature data, information of a user account and information of a device bound to the user account are retrieved, and the information of the user account and the information of the device are aggregated into the first input instruction.

It can be seen that the LLM (such as the ChatGPT model) is innovatively introduced, which includes an input side for receiving the comprehensive input instruction in text form and an output side for providing the natural language-based output instruction. The front-end input and back-end processing and output are based on natural language processing, which better aligns with the usage requirements of conventional users. In the final specific execution, the natural language-based output instruction is converted into a corresponding format for specific execution, reducing the processing difficulty of the management method. Furthermore, the data sources during processing are more diverse, resulting in enhanced processing capability of the system and enabling the method to address a wider range of problems.

The following detailed description of the specific embodiments of the present disclosure based on the drawings will help those skilled in the art to understand the above and other objectives, advantages and features of the present disclosure.

An embodiment of the present disclosure further provides a computing device. Referring to FIG. 2, the computing device includes memory 1120, processor 1110, and a computer program stored in the memory 1120 and executable by the processor 1110. The computer program is stored in space 1130 of the memory 1120 for storing a program code, and when executed by the processor 1110, the computer program is configured to implement any one of steps 1131 of the method according to the present disclosure.

An embodiment of the present disclosure further provides a computer-readable storage medium. Referring to FIG. 3, the computer-readable storage medium includes a storage unit for storing a program code. The storage unit is provided with program 1131' configured to implement steps of the method according to the present disclosure, and the program is executed by a processor.

An embodiment of the present disclosure further provides a computer program product including an instruction. When the computer program product is run on a computer, the computer is caused to implement the steps of the method according to the present disclosure.

Some or all of the functions in the foregoing embodiments may be implemented by software, hardware, firmware, or any combination thereof. When software is used for implementation, the implementation can be performed in a form of a computer program product in whole or in part. The computer program product includes one or more computer instructions. When the computer program instructions are loaded and executed on a computer, the procedures or functions according to the embodiments of the present disclosure are achieved in whole or in part. The computer may be a general-purpose computer, a dedicated computer, a computer network, or another programmable apparatus. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a digital subscriber line (DSL)) or wireless (for example, infrared, radio, and microwave, etc.) manner. The computer-readable storage medium may be any usable medium accessible by a computer, or a data storage device, such as a server or a data center, integrating one or more usable media. The usable medium may be a magnetic medium (for example, a floppy disc, a hard disc, or a magnetic tape), an optical medium (for example, a digital video disc (DVD)), a semiconductor medium (for example, a solid state disc (SSD)), etc.

Those skilled in the art should further realize that, the units and algorithmic steps of the examples described in the embodiments of the present disclosure can be implemented with electronic hardware, computer software, or a combination thereof. In order to clearly describe the interchangeability between the hardware and the software, compositions and steps of each example are generally described above according to functions. Whether the functions are performed by hardware or software depends on the particular applications and design constraints of the technical solutions. A person skilled in the art may use different methods to implement the described functions for each specific application, but such implementation should not be considered to be beyond the scope of the present disclosure.

A person of ordinary skill in the art will appreciate that all or part of the steps in the method of the aforementioned embodiments can be implemented by instructing a processor via a program. The program may be stored in a computer-readable storage medium. The storage medium is a non-transitory medium, such as random access memory (RAM), read-only memory (ROM), flash memory, hard disc, solid-state drive (SSD), magnetic tape, floppy disc, optical disc, and any combination thereof.

In particular, the present disclosure further provides a computing device, including a memory, a processor, and a computer program stored in the memory and executable on the processor, where the computer program is executed by the processor to implement the aforementioned method.

The present disclosure further provides a computer-readable storage medium. The computer-readable storage medium is configured to store a computer program, and the computer program is executed by a processor to implement the aforementioned method. The computer-readable storage medium is preferably a non-transitory readable storage medium.

The aforementioned embodiments are provided merely to illustrate the technical concept and features of the present disclosure, for the purpose of enabling those skilled in the art to understand the content of the present disclosure and implement the same accordingly, and shall not be construed as limiting the protection scope of the present disclosure. Any equivalent changes or modifications made in accordance with the spirit and essence of the present disclosure shall fall within the protection scope of the present disclosure.

## Claims

1. An interactive management system for a photovoltaic (PV) power station, comprising:
a terminal, wherein the terminal is provided with an interactive application (APP) and is configured to receive an instruction input by a user;
a device side, wherein the device side is provided at a PV power station and is configured to control and manage the PV power station;
a cloud side, wherein the cloud side is in communication connection with the terminal and the device side; and
an analysis and management unit, wherein the analysis and management unit is provided on the terminal, the device side or the cloud side, and is configured to receive, analyze, and process the instruction to generate an output instruction;
wherein the output instruction is parsed to generate a feedback instruction or an executable control instruction;
wherein the feedback instruction is sent back to the interactive APP to enable interactive communication with the user; and wherein the control instruction is distributed to the terminal, the cloud side, or the device side to perform a corresponding execution action.

2. The interactive management system for a PV power station according to claim 1, wherein the analysis and management unit comprises:
an input preprocessing module, wherein the input preprocessing module is configured to receive the instruction and perform feature extraction on the instruction to generate valid feature data in text form;
a context-based comprehensive processing module, wherein the context-based comprehensive processing module is connected to the input preprocessing module, and is configured to receive the valid feature data, and retrieve and invoke a prompt matching the valid feature data to generate a comprehensive input instruction; and
a large language model (LLM), wherein the LLM comprises an input side connected to the input preprocessing module and an output side connected to an output parsing module, and the LLM is configured to receive and process the comprehensive input instruction to generate the output instruction; and the output instruction is a natural language-based output instruction.

3. The interactive management system for a PV power station according to claim 2, wherein the analysis and management unit further comprises a memory storage module; and the memory storage module is configured to store PV standard data and real-time interaction data, and is connected to the context-based comprehensive processing module.

4. The interactive management system for a PV power station according to claim 3, wherein the context-based comprehensive processing module extracts data stored in the memory storage module according to the valid feature data to generate a first input instruction; the first input instruction is the prompt; the first input instruction is fed back to the input preprocessing module; and the input preprocessing module aggregates the valid feature data and the first input instruction to generate the comprehensive input instruction.

5. The interactive management system for a PV power station according to claim 3, wherein the memory storage module comprises a permanent storage sub-module and a flash storage sub-module; the permanent storage sub-module is configured to store the PV standard data; and the flash storage sub-module is configured to store the real-time interaction data.

6. The interactive management system for a PV power station according to claim 2 or 5, wherein the PV standard data comprises an application programming interface (API) invocation document, a product specification, and PV industry technical data.

7. The interactive management system for a PV power station according to claim 2, wherein the analysis and management unit further comprises the output parsing module; and the output parsing module is connected to the output side of the LLM, and is configured to receive and parse the output instruction to generate the feedback instruction and/or the control instruction.

8. The interactive management system for a PV power station according to claim 2, wherein the LLM comprises a chat generative pre-trained transformer (ChatGPT) model.

9. The interactive management system for a PV power station according to claim 2, wherein construction of the LLM comprises a following training process:
acquiring PV-related basic data and instruction data, constructing a domain dataset, and performing data annotation on the domain dataset to acquire an annotated domain dataset;
training a pre-trained language model through the domain dataset to update the pre-trained language model, and training the updated pre-trained language model through the annotated domain dataset to obtain a supervised fine-tuning model;
adding a classification mechanism to the supervised fine-tuning model; scoring and ranking, according to human feedback, an output from the supervised fine-tuning model with the classification mechanism added; and obtaining a reward model with a scoring mechanism;
taking the domain dataset as an input to train a reinforcement learning model, sending an obtained output result to the reward model for scoring, and feeding an obtained answer score back to the reinforcement learning model to adjust and reinforce the reinforcement learning model; and
taking the adjusted and reinforced reinforcement learning model as the LLM.

10. The interactive management system for a PV power station according to claim 9, wherein when the pre-trained language model is trained through the domain dataset, a portion of parameter layers of the pre-trained language model is frozen, such that during training, the domain dataset performs parameter updating only on another portion of the parameter layers of the pre-trained language model.

11. The interactive management system for a PV power station according to claim 9 or 10, wherein when the updated pre-trained language model is trained through the annotated domain dataset, model data is updated through a backpropagation algorithm to obtain the supervised fine-tuning model.

12. The interactive management system for a PV power station according to claim 9, wherein when the reinforcement learning model is adjusted and reinforced, a Kullback-Leibler (KL) divergence constraint with respect to the supervised fine-tuning model is added to a loss function of the reinforcement learning model to prevent overfitting of the reinforcement learning model.

13. The interactive management system for a PV power station according to claim 9, wherein the PV-related basic data comprises one or more of a user manual for the PV power station, frequently asked questions and answers (Q & A), a technical document, an online source, and user feedback information; and the instruction data is acquired by parsing a system instruction set and an interface parameter of the PV power station.

14. The interactive management system for a PV power station according to claim 1, further comprising a routing unit, wherein the routing unit is connected to the analysis and management unit, and is configured to distribute the control instruction to the terminal, the cloud side, or the device side to perform the corresponding execution action.

15. The interactive management system for a PV power station according to claim 14, further comprising a plurality of invocation and execution units, wherein the invocation and execution units are provided on the terminal, the cloud side, or the device side; each of the invocation and execution units is connected to the routing unit, and the routing unit distributes the control instruction to the invocation and execution units on the terminal, the cloud side, or the device side to perform the corresponding execution action.

16. The interactive management system for a PV power station according to claim 2, further comprising an action response unit, wherein the action response unit is configured to monitor an execution state of the execution action on the terminal, the cloud side, or the device side.

17. The interactive management system for a PV power station according to claim 16, wherein the action response unit comprises an input terminal connected to each of the invocation and execution units for executing the execution action and an output terminal connected to the input preprocessing module; the invocation and execution units are provided on the terminal, the cloud side, or the device side; according to the control instruction, the invocation and execution units determine to invoke the terminal, the cloud side, or the device side to perform the corresponding execution action; and when the execution action is performed, the action response unit feeds back response state data comprising the execution state to the context-based comprehensive processing module, and the execution action is performed recursively as required.

18. The interactive management system for a PV power station according to claim 16, wherein the memory storage module comprises a storage management sub-module; the storage management sub-module is connected to the action response unit, and is configured to receive the response state data fed back by the action response unit and update the response state data to the real-time interaction data.

19. The interactive management system for a PV power station according to claim 2, further comprising an identity configuration unit, wherein the identity configuration unit is connected to the context-based comprehensive processing module, and is configured to configure a working scenario and a role of the LLM according to an external input or the valid feature data.

20. The interactive management system for a PV power station according to claim 2, further comprising a user information management unit, wherein the user information management unit is connected to the context-based comprehensive processing module, and is configured to store information of a user account and information of a device bound to the user account.

21. The interactive management system for a PV power station according to claim 1, wherein the instruction input by the user is in the form of voice or text.

22. An interactive management method for a PV power station, comprising following steps:
inputting, by a user, an instruction through an interactive APP on a terminal, and sending the input instruction to an analysis and management unit;
analyzing and processing, by the analysis and management unit, the instruction to generate an output instruction, and performing format parsing on the output instruction to generate a feedback instruction or an executable control instruction, wherein the analysis and management unit is provided on the terminal, a device side, or a cloud side;
sending the feedback instruction back to the interactive APP to enable interactive communication with the user; and
distributing, according to specific content of the control instruction, the control instruction to the terminal, the cloud side, or the device side provided at a PV power station to perform a corresponding execution action, wherein the control instruction is in a machine language format resulting from format parsing.

23. The interactive management method for a PV power station according to claim 22, wherein the analyzing and processing, by the analysis and management unit, the instruction to generate an output instruction comprises:
preprocessing the instruction, and performing feature extraction on a keyword in the instruction to generate valid feature data in text form;
retrieving data from a memory storage module according to the valid feature data to generate a first input instruction, wherein the first input instruction is a prompt; and
aggregating the first input instruction and the valid feature data to generate a comprehensive input instruction; and
reading and processing the comprehensive input instruction through an LLM to generate the output instruction.

24. The interactive management method for a PV power station according to claim 23, wherein the retrieving data from a memory storage module according to the valid feature data to generate a first input instruction comprises:
retrieving data from the memory storage module according to the valid feature data, retrieving PV standard data and/or real-time interaction data corresponding to the valid feature data, and aggregating the retrieved PV standard data and/or real-time interaction data to generate the first input instruction.

25. The interactive management method for a PV power station according to claim 24, wherein the retrieving PV standard data and/or real-time interaction data corresponding to the valid feature data is implemented through a support vector retrieval method.

26. The interactive management method for a PV power station according to claim 22, wherein the sending the feedback instruction back to the interactive APP to enable interactive communication with the user comprises:
forming new valid feature data by combining a new instruction input by the user with the feedback instruction, generating a new comprehensive input instruction during a data retrieving process, and sending the new comprehensive input instruction to the LLM for processing.

27. The interactive management method for a PV power station according to claim 22, wherein the distributing, according to specific content of the control instruction, the control instruction to the terminal, the cloud side, or the device side provided at a PV power station to perform a corresponding execution action comprises:
decomposing an execution action with a plurality of subtasks, and recursively and automatically executing, by a system, each of the subtasks.

28. The interactive management method for a PV power station according to claim 22, wherein after the analysis and management unit analyzes and processes the instruction to generate the valid feature data, and a working scenario and a role of the LLM are automatically configured according to the valid feature data.

29. The interactive management method for a PV power station according to claim 22, wherein when the user inputs the instruction through the interactive APP on the terminal, a working scenario and a role of the LLM are manually configured by manually inputting an identity configuration parameter.

30. The interactive management method for a PV power station according to claim 22, wherein when the analysis and management unit retrieves data from the memory storage module according to the valid feature data, information of a user account and information of a device bound to the user account are retrieved, and the information of the user account and the information of the device are aggregated into the first input instruction.

31. An analysis and management unit, wherein the analysis and management unit enables interactive communication with a user through an interactive APP; the analysis and management unit is configured to receive, analyze, and process an instruction input by the user to generate an output instruction; the output instruction is parsed to generate a feedback instruction or an executable control instruction; the feedback instruction is sent back to the interactive APP to enable the interactive communication with the user; and the control instruction is distributed to a terminal, a cloud side, or a device side to perform a corresponding execution action;
the analysis and management unit comprises:
an input preprocessing module, wherein the input preprocessing module is configured to receive the instruction and perform feature extraction on the instruction to generate valid feature data;
a context-based comprehensive processing module, wherein the context-based comprehensive processing module is connected to the input preprocessing module, and is configured to receive the valid feature data and retrieve and invoke data matching the valid feature data to generate a comprehensive input instruction; and
an LLM, wherein the LLM comprises an input side connected to the input preprocessing module, and the LLM is configured to receive and process the comprehensive input instruction to generate the output instruction.

32. The analysis and management unit according to claim 31, wherein the analysis and management unit further comprises a memory storage module; the memory storage module is configured to store PV standard data and real-time interaction data, and is connected to the context-based comprehensive processing module; and the PV standard data comprises an API invocation document, a product specification, and PV industry technical data.

33. The analysis and management unit according to claim 32, wherein the memory storage module comprises a permanent storage sub-module and a flash storage sub-module; the permanent storage sub-module is configured to store the PV standard data; and the flash storage sub-module is configured to store the real-time interaction data.

34. The analysis and management unit according to claim 32 or 33, wherein the context-based comprehensive processing module extracts data stored in the memory storage module according to the valid feature data to generate a first input instruction and feeds the first input instruction back to the input preprocessing module; and the input preprocessing module aggregates the valid feature data and the first input instruction to generate the comprehensive input instruction.

35. The analysis and management unit according to claim 31, wherein the analysis and management unit further comprises an output parsing module; and the output parsing module is connected to an output side of the LLM, and is configured to receive and parse the output instruction to generate the feedback instruction and/or the control instruction.

36. The analysis and management unit according to claim 31, wherein construction of the LLM comprises a following training process:
acquiring PV-related basic data and instruction data, constructing a domain dataset, and performing data annotation on the domain dataset to acquire an annotated domain dataset;
training a pre-trained language model through the domain dataset to update the pre-trained language model, and training the updated pre-trained language model through the annotated domain dataset to obtain a supervised fine-tuning model;
adding a classification mechanism to the supervised fine-tuning model; scoring and ranking, according to human feedback, an output from the supervised fine-tuning model with the classification mechanism added; and obtaining a reward model with a scoring mechanism;
taking the domain dataset as an input to train a reinforcement learning model, sending an obtained output result to the reward model for scoring, and feeding an obtained answer score back to the reinforcement learning model to adjust and reinforce the reinforcement learning model; and
taking the adjusted and reinforced reinforcement learning model as the LLM.

37. The analysis and management unit according to claim 36, wherein when the pre-trained language model is trained through the domain dataset, a portion of parameter layers of the pre-trained language model is frozen, such that during training, the domain dataset performs parameter updating only on another portion of the parameter layers of the pre-trained language model.

38. The analysis and management unit according to claim 36 or 37, wherein when the updated pre-trained language model is trained through the annotated domain dataset, model data is updated through a backpropagation algorithm to obtain the supervised fine-tuning model.

39. The analysis and management unit according to claim 36, wherein when the reinforcement learning model is adjusted and reinforced, a KL divergence constraint with respect to the supervised fine-tuning model is added to a loss function of the reinforcement learning model to prevent overfitting of the reinforcement learning model.

40. The analysis and management unit according to claim 36, wherein the PV-related basic data comprises one or more of a user manual for a PV power station, frequently asked Q & A, a technical document, an online source, and user feedback information; and the instruction data is acquired by parsing a system instruction set and an interface parameter of the PV power station.
